# EUROPEAN PATENT APPLICATION

(11) **EP 4 252 701 A1**
(43) Date of publication of application: **04.10.2023**
(21) Application number: 21901067.5
(22) Date of filing: 03.12.2021
(51) Int. Cl.: A61C 8/00

(54) **CUSTOMIZED READY-MADE ABUTMENT**

(30) Priority: 04.12.2020 KR 20200169035
(71) Applicant: Osstemimplant Co., Ltd., Gangseo-gu Seoul 07789 (KR)
(72) Inventor: CHOI, Kyoo Ok, Seoul 07789 (KR); EOM, Tae Kwan, Seoul 07789 (KR); HEO, Jae Chan, Seoul 07789 (KR); LEE, Young Seok, Seoul 07789 (KR)
(74) Representative: Isarpatent
(86) International application number: PCT/KR2021/018228
(87) International publication number: WO 2022/119379

(57) **Abstract**

An embodiment provides a customized ready-made abutment which comprises: a post positioned at the upper end thereof to be able to be coupled inside a crown; a lower part positioned at the lower end thereof such that a part or all of the lower part can be coupled to an implant; and a gingival part positioned between the post and the lower part to be in contact with gingiva without being coupled to the implant, wherein all teeth of the maxilla and the mandible are grouped into maxillary anterior teeth, mandibular anterior teeth, canine teeth, premolar teeth, and molar teeth, and multiple customized ready-made abutments are designed and manufactured such that a standard coverage of a patient-customized abutment for each group is 65% or more.

## Description

### [Technical Field]

The present disclosure relates to a customized ready-made abutment.

### [Background Art]

An implant is a replacement material for restoring lost human tissue. In dentistry, an implant is generally a replacement material that is implanted and adhered to an alveolar bone from which a natural tooth root has become detached so as to replace the root of a lost tooth.

Such dental implants can be classified in various ways according to a method of combining an artificial tooth and a tooth root. Among the dental implants, there is a screw-type implant that uses a coupling force of a screw, and a conventional screw-type implant system (assembly) is composed of an implant, an abutment, an artificial tooth, and the like.

In order to perform implantation, an operator selects an appropriate implant or abutment from among products having various diameters and screw pitches in consideration of the patient's oral condition.

In particular, in an implant system, in the case of an abutment positioned between an implant implanted in an alveolar bone and an artificial tooth, various shapes of abutments may be used according to the condition of an implant implanted in a jawbone, the condition of the patient's oral cavity, or the like.

Recently, a method of manufacturing and using a customized abutment suitable for an individual patient using the computer-aided design (CAD) and computer-aided manufacturing (CAM) method without using an abutment provided as a ready-made product has been proposed. Customized abutments take a long time to manufacture and are expensive because they are manufactured according to each individual. However, since the customized abutment is manufactured to fit an artificial tooth and a gingiva, it is possible to prevent food from being caught and it is aesthetically excellent. On the other hand, in the case of ready-made abutments, products that are pre-manufactured in large quantities may be received from manufacturers and used such that the ready-made abutments are mass-produced, and thus there is an advantage of being able to receive the ready-made abutments in a short period of time and being inexpensive. However, the ready-made abutment may not fit an artificial tooth and gingiva, and thus there is a problem that food may be caught or tooth dislocation may occur.

### [Disclosure]

### [Technical Problem]

The present disclosure is directed to providing a customized ready-made abutment. Specifically, the present disclosure is directed to providing an abutment having both an advantage of a customized abutment and an advantage of a ready-made abutment.

The technical problem to be solved is not limited to the technical problems described above, and various technical problems may be further included within a range obvious to those skilled in the art.

### [Technical Solution]

One aspect of the present disclosure provides a customized ready-made abutment which includes a post positioned at an upper end thereof to be allowed to be coupled to an inside of a crown; a lower part positioned at a lower end thereof such that a part or all of the lower part is allowed to be coupled to an implant; and a gingival part positioned between the post and the lower part to be in contact with gingiva without being coupled to the implant, wherein all teeth of maxilla and mandible are grouped into maxillary anterior teeth, mandibular anterior teeth, canine teeth, premolar teeth, and molar teeth, and a plurality of customized ready-made abutments are designed and manufactured such that a standard coverage of a patient-customized abutment for each group is 65% or more.

In the customized ready-made abutment, all the teeth of the maxilla and the mandible may be grouped into the maxillary anterior teeth, the mandibular anterior teeth, the canine teeth, the premolar teeth, and the molar teeth, and a plurality of customized ready-made abutments may be designed and manufactured for each group such that the standard coverage of the patient-customized abutment for each group is 65% or more on the basis of statistical data of the patient-customized abutments.

When a type of a tooth is a molar tooth and a unit length corresponds to 0.5 mm, a statistical distribution range determined according to horizontal and vertical lengths of an axial projection image of the customized ready-made abutment may be divided into 9 regions, and a coverage of the 9 regions may be 85% or more.

When a type of a tooth is a molar tooth and a unit length corresponds to 0.5 mm, a statistical distribution range determined according to horizontal and vertical lengths of an axial projection image of the customized ready-made abutment may be divided into 7 regions, and a coverage of the 7 regions may be 75% or more.

When a type of a tooth is a molar tooth and a unit length corresponds to 0.5 mm, a statistical distribution range determined according to horizontal and vertical lengths of an axial projection image of the customized ready-made abutment may be divided into 5 regions, and, and a coverage of the 5 regions may be 65% or more.

When a type of a tooth is a premolar tooth and a unit length corresponds to 0.5 mm, a statistical distribution range determined according to horizontal and vertical lengths of an axial projection image of the customized ready-made abutment may be divided into 9 regions, and a coverage of the 9 regions may be 90% or more.

When a type of a tooth is a premolar tooth and a unit length corresponds to 0.5 mm, a statistical distribution range determined according to horizontal and vertical lengths of an axial projection image of the customized ready-made abutment may be divided into 7 regions, and a coverage of the 9 regions may be 80% or more.

When a type of a tooth is a premolar tooth and a unit length corresponds to 0.5 mm, a statistical distribution range determined according to horizontal and vertical lengths of and axial projection image of the customized ready-made abutment may be divided into 5 regions, and a coverage of the 9 regions may be 65% or more.

Another aspect of the present disclosure provides a customized ready-made abutment which includes a post positioned at an upper end thereof to be allowed to be coupled to an inside of a crown; a lower part positioned at a lower end thereof such that a part or all of the lower part is allowed to be coupled to an implant; and a gingival part positioned between the post and the lower part to be in contact with gingiva without being coupled to the implant, wherein at least one of horizontal and vertical lengths of an axial projection image of the abutment, a height of the gingival part, a height of the post, and an angle of the post is standardized and determined according to a plurality of region division results for a statistical distribution range of patient-customized abutments.

A number of customized ready-made abutments may be determined based on a sum of a number of groups obtained as results obtained by performing grouping on the statistical distribution range for each tooth type on the basis of a unit length and/or a unit angle, and the tooth type may include at least one of a maxillary anterior tooth, a mandibular anterior tooth, a canine tooth, a premolar tooth, and a molar tooth.

The unit length is determined to be 0.4 mm or more and less than 1.1 mm, and thus the number of the customized ready-made abutments for the maxillary anterior tooth may be determined to be 4 or more and less than 9 on the basis of the horizontal and vertical lengths, the number of the customized ready-made abutments for the mandibular anterior tooth may be determined to be 2 or more and less than 7 on the basis of the horizontal and vertical lengths, the number of the customized ready-made abutments for the canine tooth may be determined to be 4 or more and less than 9 on the basis of the horizontal and vertical lengths, the number of the customized ready-made abutments for the premolar tooth may be determined to be 2 or more and less than 7 on the basis of the horizontal and vertical lengths, and the number of the customized ready-made abutments for the molar tooth may be determined to be 4 or more and less than 10 on the basis of the horizontal and vertical lengths.

### [Advantageous Effects]

According to an embodiment, it is possible to provide an abutment that is more customized and is cost-effective to a group of patients of various implant cases.

Further, by securing a minimum coverage, a customized ready-made abutment can be provided.

Effects of the present disclosure are not limited to the above-described effects, and it should be understood that all possible effects deduced from a configuration of the present disclosure described in detailed descriptions and the appended claims are included.

### [Description of Drawings]

FIG. 1 is a diagram for describing a configuration of a customized ready-made abutment (100) according to an embodiment.
FIG. 2 is a diagram for describing a method of determining a number of customized ready-made abutments (100) according to a plurality of region division results according to an embodiment.
FIG. 3 is a diagram for describing a method of determining the number of customized ready-made abutments (100) according to results obtained by performing grouping for each tooth type on the basis of a height of a gingival part (120) according to an embodiment.
FIG. 4 is a diagram for describing a method of determining the number of customized ready-made abutments (100) according to results obtained by performing grouping for each tooth type on the basis of a height of a post (110) according to an embodiment.
FIG. 5 is a diagram for describing a method of determining the number of customized ready-made abutments (100) according to results obtained by performing grouping for each tooth type on the basis of an angle of a post (110) according to an embodiment.
FIGS. 6 to 10 are diagrams for describing various examples in which the number of customized ready-made abutments (100) is determined according to a result obtained by dividing a plurality of regions according to an embodiment.
FIGS. 11 to 25 are diagrams for describing various examples of being divided into a plurality of regions on the basis of a unit length corresponding to 0.5 mm according to an embodiment.

### [Modes of the Invention]

Although the terms used herein are selected from among general terms that are currently and widely used in consideration of functions in embodiments of the present disclosure, these may be changed according to intentions of those skilled in the art, precedents, or the advent of new technology. In addition, in a specific case, some terms may be arbitrary selected by applicants. In this case, meanings thereof will be described in detail in a corresponding description of embodiments of the present disclosure. Therefore, the terms used herein should be defined based on meanings of the terms and content of this entire specification, rather than simply the terms themselves.

Throughout this specification, when a certain part "includes" a certain component, it means that another component may be further included not excluding another component unless otherwise defined.

Hereinafter, embodiments of the present disclosure that can be easily performed by those skilled in the art will be described in detail with reference to the accompanying drawings. However, embodiments of the present disclosure may be implemented in several different forms, and are not limited to embodiments described herein.

Hereinafter, embodiments of the present disclosure will be described in detail with reference to the accompanying drawings.

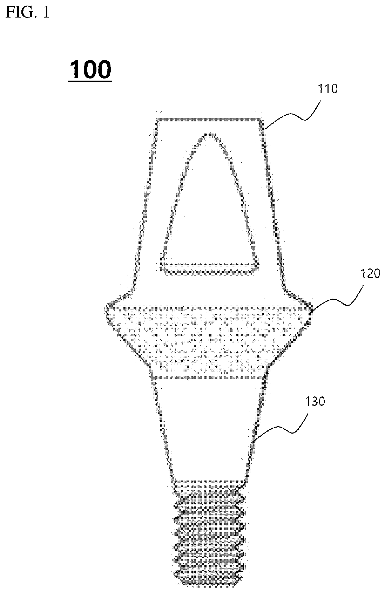

FIG. 1 is a diagram for describing a configuration of a customized ready-made abutment 100 according to an embodiment.

Referring to FIG. 1, the customized ready-made abutment 100 may include a post 110 positioned at an upper end thereof to be able to be coupled to an inside of a crown, a lower part 130 positioned at a lower end thereof such that a part or all of the lower part is able to be coupled to an implant, and a gingival part 120 positioned between the post 110 and the lower part 130 to be in contact with gingiva without being coupled to the implant.

The customized ready-made abutment 100 is a ready-made abutment having a customized abutment shape statistically optimized for oral environments of multiple patients.

A size of the customized ready-made abutment 100 may be determined according to various criteria. For example, the size of the customized ready-made abutment 100 may include horizontal and vertical lengths of an axial projection image of the abutment, a height of the gingival part 120, a height of the post 110, and the like.

The customized ready-made abutment 100 may be defined according to various criteria and measurement values thereof. For example, the customized ready-made abutment 100 may be defined using the horizontal and vertical lengths of the axial projection image of the abutment, the height of the gingival part 120, the height of the post 110, an angle of the post 110, and the like, but the present disclosure is not limited thereto. The angle of the post 110 may be an angle between the post 110 and the gingival part 120 or an angle between the post 110 and the lower part 130.

The size of the customized ready-made abutment 100 or the angle of the post 110 may be determined according to a region division result for an entire statistical distribution range of patient-customized abutments. Here, the region division may be interpreted as one or more partial distribution ranges specified on a two-dimensional distribution or a one-dimensional distribution of statistical data.

According to an embodiment, the region division may be performed based on a unit length, and a difference in length between groups may be expressed as a multiple of the unit length.

According to an embodiment, a range of the unit length may include at least one of 0.5 mm, 0.75 mm, and 1.0 mm. For example, the unit length may correspond to at least one of 0.5 mm, 0.75 mm, and 1.0 mm. In this case, when the unit length corresponds to 0.5 mm, the unit length may be a value within a preset range (e.g., 0.1 mm, 0.01 mm, 0.2 mm, etc.) from 0.5 mm, when the unit length corresponds to 0.75 mm, the unit length may be a value within a preset range from 0.75 mm, and when the unit length corresponds to 1.0 mm, the unit length may be a value within a preset range from 1.0 mm, but the present disclosure is not limited thereto.

According to an embodiment, grouping may be performed for each tooth type, the region division result for the statistical distribution range may be grouped according to the group for each tooth type, and the tooth type may include at least one of a maxillary anterior tooth, a mandibular anterior tooth, a canine tooth, a premolar tooth, and a molar tooth.

According to an embodiment, at least one of the horizontal and vertical lengths of the axial projection image of the customized ready-made abutment 100, the height of the gingival part 120, the height of the post 110, and the angle of the post 110 may be standardized and determined according to a plurality of region division results for a statistical distribution range of patient-customized abutments. Groups determined according to the region division may be determined to secure a coverage as wide as possible for the entire statistical distribution range of the patient-customized abutments. Here, the coverage may be a ratio of the number of patient-customized abutments belonging to the divided regions to the total number of patient-customized abutments within the entire statistical distribution range of the patient-customized abutments. For example, the region division result may be obtained so that the coverage of the entire region is maximized while the coverage of each region is greater than or equal to a set value according to the region division, each group corresponding to each region may be determined, and thus wide coverage may be secured over the entire statistical distribution range. By standardizing the region division result in this way, the customized ready-made abutment 100 may be obtained. Specifically, the horizontal and vertical lengths of the axial projection image of the customized ready-made abutment 100, the height of the gingival part 120, the height of the post 110, the angle of the post 110, and the like may be determined by being standardized.

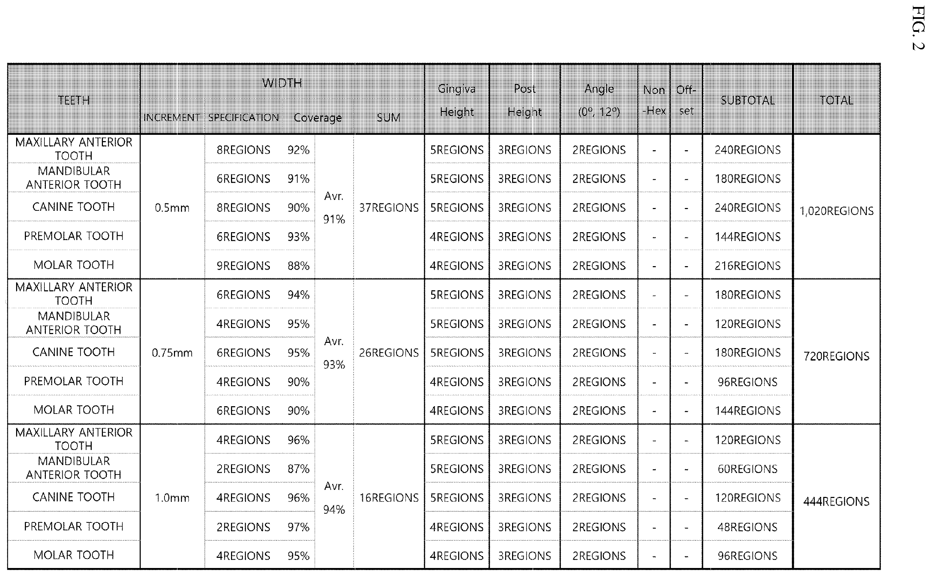

The number of customized ready-made abutments 100 according to an embodiment may be determined based on the sum of the numbers of groups obtained as results obtained by performing the grouping on the statistical distribution range for each tooth type on the basis of a unit length and/or a unit angle, and a specific example thereof will be described with reference to FIG. 2. Further, the tooth type may include at least one of a maxillary anterior tooth, a mandibular anterior tooth, a canine tooth, a premolar tooth, and a molar tooth.

According to an embodiment, all teeth of maxilla and mandible may be grouped into maxillary anterior teeth, mandibular anterior teeth, canine teeth, premolar teeth, and molar teeth, and a plurality of customized ready-made abutments 100 may be designed and manufactured so that a standard coverage of a patient-customized abutment for each group is 65% or more. For all the teeth of maxilla and mandible, the types of teeth may be determined according to the positions of the teeth, and a target tooth may be determined (or grouped) as any one of a maxillary anterior tooth, a mandibular anterior tooth, a canine tooth, a premolar tooth, and a molar tooth on the basis of the position of the tooth. Alternatively, the type of tooth indicated by the position of the tooth may be determined (or grouped) as any one of a maxillary anterior tooth, a mandibular anterior tooth, a canine tooth, a premolar tooth, and a molar tooth.

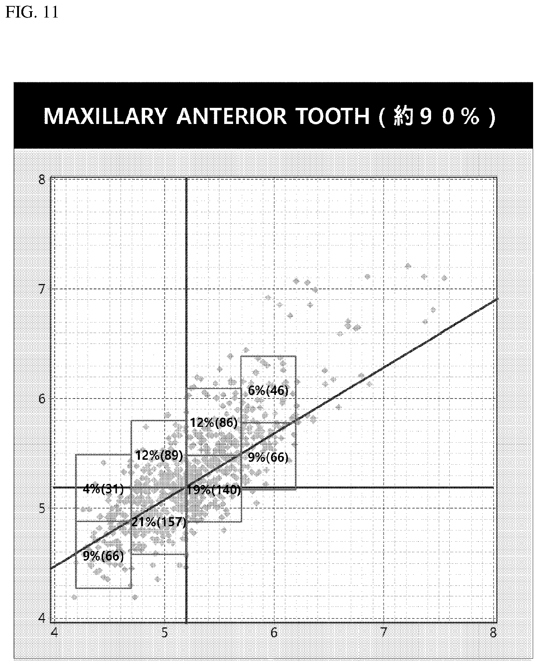

According to an embodiment, the customized ready-made abutment 100 may group all the teeth of maxilla and mandible into maxillary anterior teeth, mandibular anterior teeth, canine teeth, premolar teeth, and molar teeth, and a plurality of customized ready-made abutments 100 may be designed and manufactured such that a standard coverage of a patient-customized abutment for each group is 65% or more on the basis of statistical data of the patient-customized abutments. For example, for all the teeth of maxilla and mandible, a plurality of customized ready-made abutments 100 may be obtained for each of the maxillary anterior teeth, the mandibular anterior teeth, the canine teeth, the premolar teeth, and the molar teeth. For example, n customized ready-made abutments 100 (n is a natural number and can usually be a number from 2 to 9) may be defined according to the region division result for the horizontal and vertical lengths of the axial projection image of the customized ready-made abutment 100 for the molar tooth. Further, grouping may be performed based on the statistical data of the patient-customized abutments for each group (or for each tooth type), and a standard coverage of the patient-customized abutment is 65% or more. A plurality of examples in which a coverage is maintained at 65% or more will be described below with reference to FIGS. 11 to 25.

FIG. 2 is a diagram for describing a method of determining the number of customized ready-made abutments 100 according to a plurality of region division results according to an embodiment.

Referring to FIG. 2, according to an embodiment, a statistical distribution range of horizontal and vertical lengths of an axial projection image of the customized ready-made abutment 100 may be divided into a plurality of regions on the basis of a unit length corresponding to 1.0 mm. In this case, a maxillary anterior tooth may be divided into 4 regions (in this case, a coverage corresponds to 96%), a mandibular anterior tooth may be divided into 2 regions (in this case, a coverage corresponds to 87%), a canine tooth may be divided into 4 regions (in this case, a coverage corresponds to 96%), a premolar tooth may be divided into 2 regions (in this case, a coverage corresponds to 97%), and a molar tooth may be divided into 4 regions (in this case, a coverage corresponds to 95%). Therefore, 16 region division results for the horizontal and vertical lengths of the axial projection image of the customized ready-made abutment 100 may be obtained.

According to an embodiment, a statistical distribution range of a height of a gingival part 120 may be divided into a plurality of regions on the basis of the unit length corresponding to 1.0 mm. In this case, the maxillary anterior tooth may be divided into 5 regions, the mandibular anterior tooth may be divided into 5 regions, the canine tooth may be divided into 5 regions, the premolar tooth may be divided into 4 regions, and the molar tooth may be divided into 4 regions.

According to an embodiment, a statistical distribution range of a height of a post 110 may be divided into a plurality of regions on the basis of the unit length corresponding to 1.0 mm. In this case, the maxillary anterior tooth may be divided into 3 regions, the mandibular anterior tooth may be divided into 3 regions, the canine tooth may be divided into 3 regions, the premolar tooth may be divided into 3 regions, and the molar tooth may be divided into 3 regions.

According to an embodiment, a statistical distribution range of an angle of the post 110 may be divided into a plurality of regions on the basis of a unit angle corresponding to 12 degrees. In this case, the maxillary anterior tooth may be divided into 2 regions, the mandibular anterior tooth may be divided into 2 regions, the canine tooth may be divided into 2 regions, the premolar tooth may be divided into 2 regions (or 1 region), and the molar tooth may be divided into 2 regions (or 1 region).

Therefore, the maxillary anterior tooth may be divided into 4 regions with respect to the horizontal and vertical lengths of the axial projection image, 5 regions with respect to the height of the gingival part 120, 3 regions with respect to the height of the post 110, and 2 regions with respect to the angle of the post 110, and thus a total of 120 region division results may be obtained. Therefore, 120 customized ready-made abutments 100 may be determined for the maxillary anterior tooth. In a similar way, 60 region division results may be obtained for the mandibular anterior tooth, 120 region division results may be obtained for the canine tooth, 48 region division results may be obtained for the premolar tooth, and 96 region division results may be obtained for the molar tooth. Therefore, when the unit length corresponds to 1 mm and the unit angle corresponds to 12 degrees, 444 region division results may be obtained.

According to an embodiment, the statistical distribution range of the horizontal and vertical lengths of the axial projection image of the customized ready-made abutment 100 may be divided into a plurality of regions on the basis of a unit length corresponding to 0.75 mm. In this case, the maxillary anterior tooth may be divided into 6 regions (in this case, a coverage corresponds to 94%), the mandibular anterior tooth may be divided into 4 regions (in this case, a coverage corresponds to 95%), the canine tooth may be divided into 6 regions (in this case, a coverage corresponds to 95%), the premolar tooth may be divided into 4 regions (in this case, a coverage corresponds to 90%), and the molar tooth may be divided into 6 regions (in this case, a coverage corresponds to 90%). Therefore, 26 region division results for the horizontal and vertical lengths of the axial projection image of the customized ready-made abutment 100 may be obtained.

According to an embodiment, the statistical distribution range of the height of the gingival part 120 may be divided into a plurality of regions on the basis of the unit length corresponding to 0.75 mm. In this case, the maxillary anterior tooth may be divided into 5 regions, the mandibular anterior tooth may be divided into 5 regions, the canine tooth may be divided into 5 regions, the premolar tooth may be divided into 4 regions, and the molar tooth may be divided into 4 regions.

According to an embodiment, the statistical distribution range of the height of the post 110 may be divided into a plurality of regions on the basis of the unit length corresponding to 0.75 mm. In this case, the maxillary anterior tooth may be divided into 3 regions, the mandibular anterior tooth may be divided into 3 regions, the canine tooth may be divided into 3 regions, the premolar tooth may be divided into 3 regions, and the molar tooth may be divided into 3 regions.

According to an embodiment, the statistical distribution range of the angle of the post 110 may be divided into a plurality of regions on the basis of a unit angle corresponding to 12 degrees. In this case, the maxillary anterior tooth may be divided into 2 regions, the mandibular anterior tooth may be divided into 2 regions, the canine tooth may be divided into 2 regions, the premolar tooth may be divided into 2 regions (or 1 region), and the molar tooth may be divided into 2 regions (or 1 region).

Therefore, the maxillary anterior tooth may be divided into 6 regions with respect to the horizontal and vertical lengths of the axial projection image, 5 regions with respect to the height of the gingival part 120, 3 regions with respect to the height of the post 110, and 2 regions with respect to the angle of the post 110, and thus a total of 180 region division results may be obtained. Therefore, 180 customized ready-made abutments 100 may be determined for the maxillary anterior tooth. In a similar way, 120 region division results may be obtained for the mandibular anterior tooth, 180 region division results may be obtained for the canine tooth, 96 region division results may be obtained for the premolar tooth, and 144 region division results may be obtained for the molar tooth. Therefore, when the unit length corresponds to 0.75 mm and the unit angle corresponds to 12 degrees, 720 region division results may be obtained.

According to an embodiment, the statistical distribution range of the horizontal and vertical lengths of the axial projection image of the customized ready-made abutment 100 may be divided into a plurality of regions on the basis of a unit length corresponding to, for example, 0.5 mm. In this case, the maxillary anterior tooth may be divided into 8 regions (in this case, a coverage corresponds to 92%), the mandibular anterior tooth may be divided into 6 regions (in this case, a coverage corresponds to 91%), the canine tooth may be divided into 8 regions (in this case, a coverage corresponds to 90%), the premolar tooth may be divided into 6 regions (in this case, a coverage corresponds to 93%), and the molar tooth may be divided into 9 regions (in this case, a coverage corresponds to 88%). Therefore, 37 region division results for the horizontal and vertical lengths of the axial projection image of the customized ready-made abutment 100 may be obtained.

According to an embodiment, the statistical distribution range of the height of the gingival part 120 may be divided into a plurality of regions on the basis of the unit length corresponding to, for example, 0.5 mm. In this case, the maxillary anterior tooth may be divided into 5 regions, the mandibular anterior tooth may be divided into 5 regions, the canine tooth may be divided into 5 regions, the premolar tooth may be divided into 4 regions, and the molar tooth may be divided into 4 regions.

According to an embodiment, the statistical distribution range of the height of the post 110 may be divided into a plurality of regions on the basis of the unit length corresponding to, for example, 0.5 mm. In this case, the maxillary anterior tooth may be divided into 3 regions, the mandibular anterior tooth may be divided into 3 regions, the canine tooth may be divided into 3 regions, the premolar tooth may be divided into 3 regions, and the molar tooth may be divided into 3 regions.

According to an embodiment, the statistical distribution range of the angle of the post 110 may be divided into a plurality of regions on the basis of a unit angle corresponding to 12 degrees. In this case, the maxillary anterior tooth may be divided into 2 regions, the mandibular anterior tooth may be divided into 2 regions, the canine tooth may be divided into 2 regions, the premolar tooth may be divided into 2 regions (or 1 region), and the molar tooth may be divided into 2 regions (or 1 region).

Therefore, the maxillary anterior tooth may be divided into 8 regions with respect to the horizontal and vertical lengths of the axial projection image, 5 regions with respect to the height of the gingival part 120, 3 regions with respect to the height of the post 110, and 2 regions with respect to the angle of the post 110, and thus a total of 240 region division results may be obtained. Therefore, 240 customized ready-made abutments 100 may be determined for the maxillary anterior tooth. In a similar way, 180 region division results may be obtained for the mandibular anterior tooth, 240 region division results may be obtained for the canine tooth, 144 region division results may be obtained for the premolar tooth, and 216 region division results may be obtained for the molar tooth. Therefore, when the unit length corresponds to 0.5 mm and the unit angle corresponds to 12 degrees, 1,020 region division results may be obtained.

Referring to FIG. 2, when the unit length corresponds to 0.5 mm, 0.75 mm, or 1 mm and the unit angle corresponds to 12 degrees, 400 regions or more region division results may be obtained.

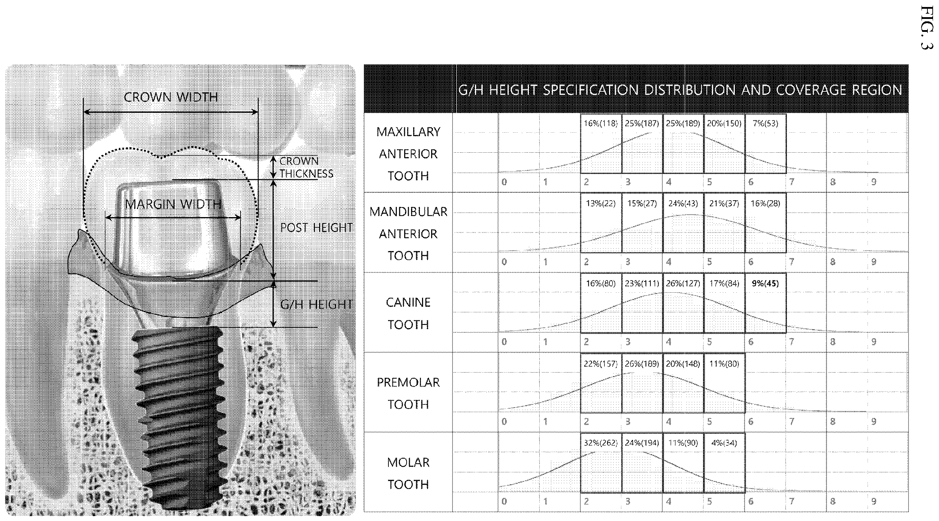

FIG. 3 is a diagram for describing a method of determining the number of customized ready-made abutments 100 according to results obtained by performing grouping for each tooth type on the basis of a height of a gingival part 120 according to an embodiment.

Referring to FIG. 3, according to an embodiment, a statistical distribution range of a height (G/H) of the gingival part 120 of the customized ready-made abutment 100 may be divided into a plurality of regions on the basis of a preset unit length (e.g., 1.0 mm), and the region division results may be grouped according to a group of each tooth type. In this case, a maxillary anterior tooth may be grouped into 5 regions (in this case, a coverage corresponds to 96%), a mandibular anterior tooth may be grouped into 5 regions (in this case, a coverage corresponds to 87%), a canine tooth may be grouped into 5 regions (in this case, a coverage corresponds to 96%), a premolar tooth may be grouped into 4 regions (in this case, a coverage corresponds to 97%), and a molar tooth may be grouped into 4 regions (in this case, a coverage corresponds to 95%).

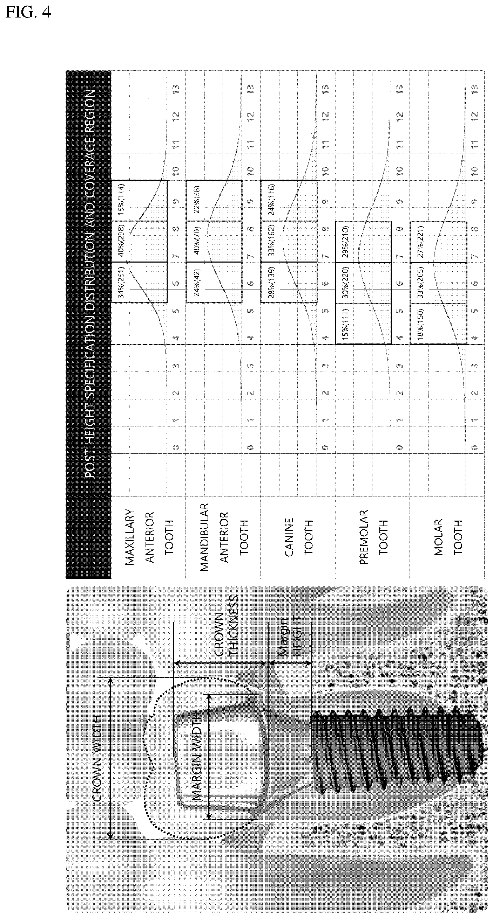

FIG. 4 is a diagram for describing a method of determining the number of customized ready-made abutments 100 according to results obtained by performing grouping for each tooth type on the basis of a height of a post 110 according to an embodiment.

Referring to FIG. 4, according to an embodiment, a statistical distribution range of the height of the post 110 of the customized ready-made abutment 100 may be divided into a plurality of regions on the basis of a preset unit length (e.g., 1.0 mm), and the region division results may be grouped according to a group of each tooth type. In this case, the maxillary anterior tooth may be grouped into 3 regions (in this case, a coverage corresponds to 89%), the mandibular anterior tooth may be grouped into 3 regions (in this case, a coverage corresponds to 85%), the canine tooth may be grouped into 3 regions (in this case, a coverage corresponds to 85%), the premolar tooth may be grouped into 3 regions (in this case, a coverage corresponds to 75%), and the molar tooth may be grouped into 3 regions (in this case, a coverage corresponds to 78%).

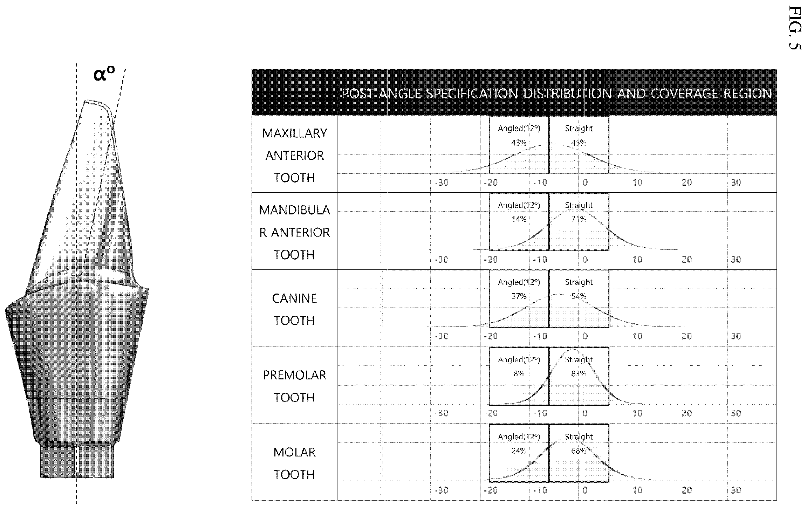

FIG. 5 is a diagram for describing a method of determining the number of customized ready-made abutments 100 according to results obtained by performing grouping for each tooth type on the basis of an angle of a post 110 according to an embodiment.

Referring to FIG. 5, according to an embodiment, a statistical distribution range of the angle of the post 110 of the customized ready-made abutment 100 may be divided into a plurality of regions on the basis of a preset unit angle (e.g., 12 degrees), and the region division results may be grouped according to a group of each tooth type. In this case, a maxillary anterior tooth may be grouped into 2 regions (in this case, a coverage corresponds to 88%), a mandibular anterior tooth may be grouped into 2 regions (in this case, a coverage corresponds to 85%), a canine tooth may be grouped into 2 regions (in this case, a coverage corresponds to 91%), a premolar tooth may be grouped into 1 region (in this case, a coverage corresponds to 83%), and a molar tooth may be grouped into 1 region (in this case, a coverage corresponds to 68%).

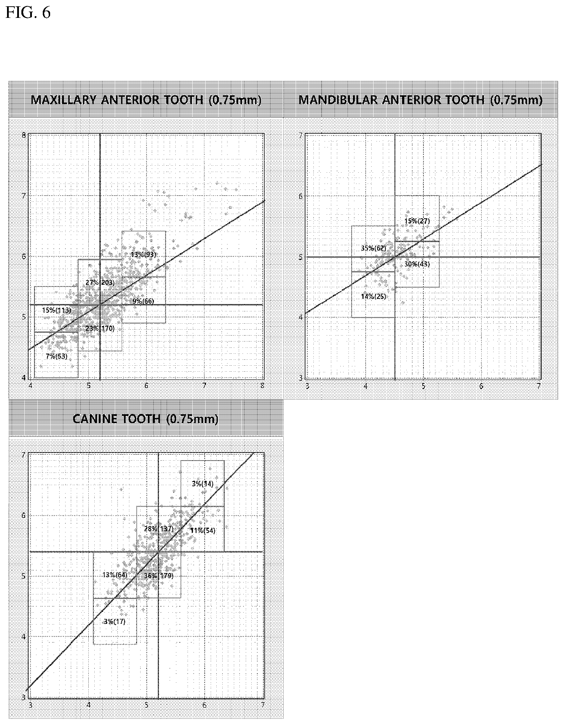

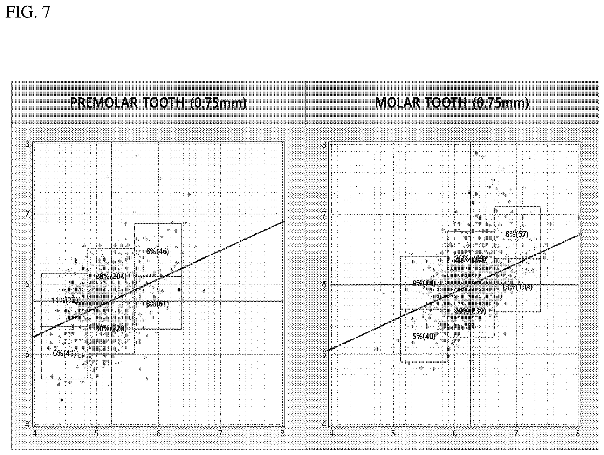

Referring to FIGS. 6 and 7, according to an embodiment, a statistical distribution range of horizontal and vertical lengths of an axial projection image of a customized ready-made abutment 100 may be divided into a plurality of regions on the basis of a unit length corresponding to 0.75 mm. In this case, a maxillary anterior tooth may be divided into 6 regions to secure a coverage of 94%, a mandibular anterior tooth may be divided into 4 regions to secure a coverage of 95%, a canine tooth may be divided into 6 regions to secure a coverage of 95%, a premolar tooth may be divided into 6 regions to secure a coverage of 90%, and a molar tooth may be divided into 6 regions to secure a coverage of 90%.

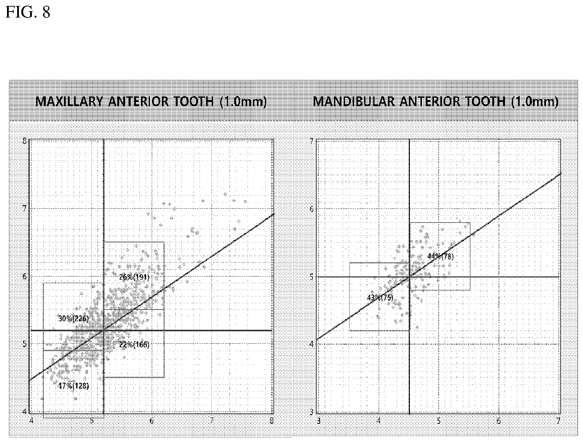

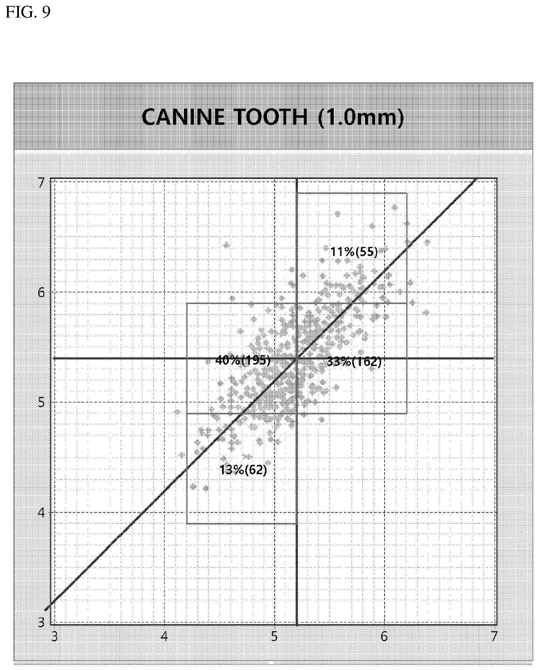

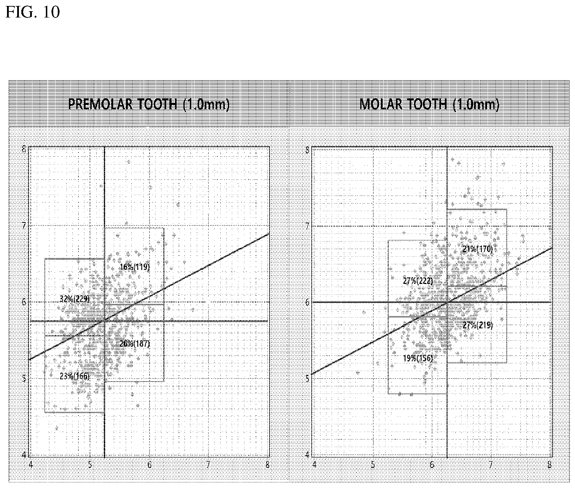

Referring to FIGS. 8 to 10, according to an embodiment, a statistical distribution range of horizontal and vertical lengths of an axial projection image of a customized ready-made abutment 100 may be divided into a plurality of regions on the basis of a unit length corresponding to 1.0 mm. In this case, a maxillary anterior tooth may be divided into 4 regions to secure a coverage of 96%, a mandibular anterior tooth may be divided into 2 regions to secure a coverage of 87%, a canine tooth may be divided into 4 regions to secure a coverage of 96%, a premolar tooth may be divided into 4 regions to secure a coverage of 97%, and a molar tooth may be divided into 4 regions to secure a coverage of 95%.

As described above, it can be confirmed that a high coverage can be secured at a level of about 90% by appropriately setting the number of regions for each tooth type.

FIG. 11 is a diagram illustrating an example of a result obtained by dividing a statistical distribution range of maxillary anterior teeth into regions such that a coverage according to the region division result is 90% or more according to an embodiment.

Referring to FIG. 11, a statistical distribution range of horizontal and vertical lengths of an axial projection image of a customized ready-made abutment 100 according to the embodiment may be divided into a plurality of regions on the basis of a unit length corresponding to, for example, 0.5 mm. For example, the statistical distribution range of the horizontal and vertical lengths of the axial projection image of the customized ready-made abutment 100 may be divided into 8 regions on the basis of the unit length of 0.5 mm, and thus a coverage of 92% may be secured.

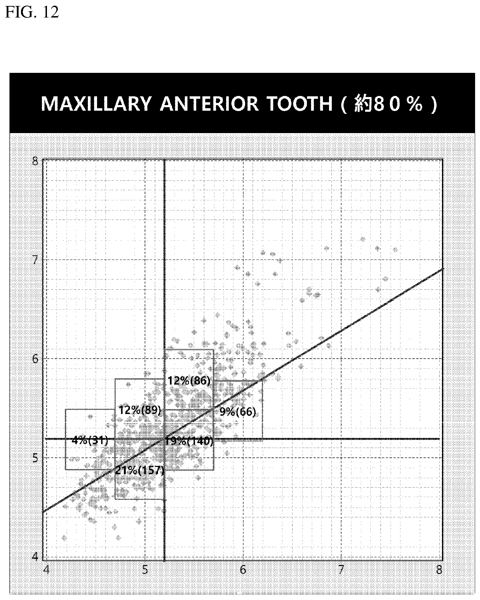

FIG. 12 is a diagram illustrating an example of a result obtained by dividing the statistical distribution range of the maxillary anterior teeth into regions such that the coverage according to the region division result is 75% or more according to the embodiment.

Referring to FIG. 12, the statistical distribution range of the horizontal and vertical lengths of the axial projection image of the customized ready-made abutment 100 according to the embodiment may be divided into a plurality of regions on the basis of a unit length corresponding to, for example, 0.5 mm. For example, the statistical distribution range of the horizontal and vertical lengths of the axial projection image of the customized ready-made abutment 100 may be divided into 6 regions on the basis of the unit length of 0.5 mm, and thus a coverage of 77% may be secured.

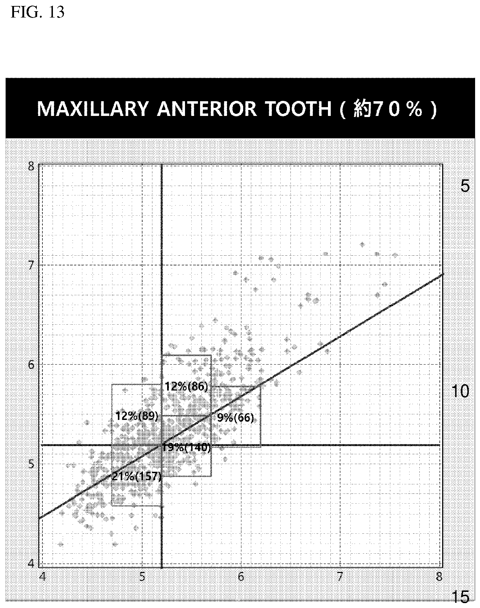

FIG. 13 is a diagram illustrating an example of a result obtained by dividing the statistical distribution range of the maxillary anterior teeth into regions such that the coverage according to the region division result is 70% or more according to the embodiment.

Referring to FIG. 13, the statistical distribution range of the horizontal and vertical lengths of the axial projection image of the customized ready-made abutment 100 according to the embodiment may be divided into a plurality of regions on the basis of the unit length corresponding to, for example, 0.5 mm. For example, the statistical distribution range of the horizontal and vertical lengths of the axial projection image of the customized ready-made abutment 100 may be divided into 5 regions on the basis of the unit length of 0.5 mm, and thus a coverage of 73% may be secured.

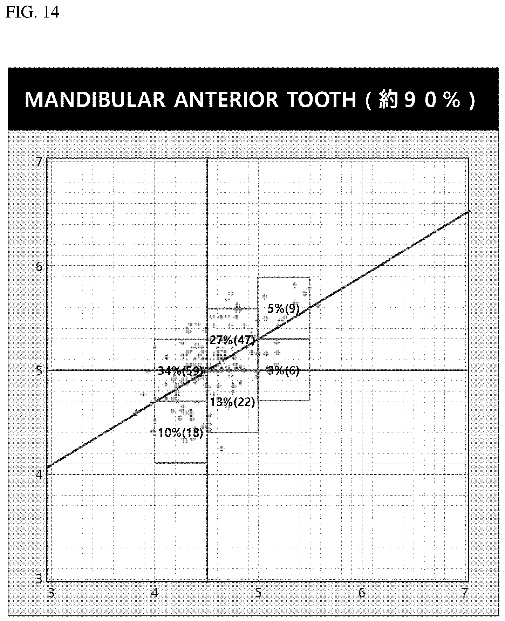

FIG. 14 is a diagram illustrating an example of a result obtained by dividing a statistical distribution range of mandibular anterior teeth into regions such that a coverage according to the region division result is 90% or more according to an embodiment.

Referring to FIG. 14, a statistical distribution range of horizontal and vertical lengths of an axial projection image of a customized ready-made abutment 100 according to the embodiment may be divided into a plurality of regions on the basis of a unit length corresponding to, for example, 0.5 mm. For example, the statistical distribution range of the horizontal and vertical lengths of the axial projection image of the customized ready-made abutment 100 may be divided into 6 regions on the basis of the unit length of 0.5 mm, and thus a coverage of 92% may be secured.

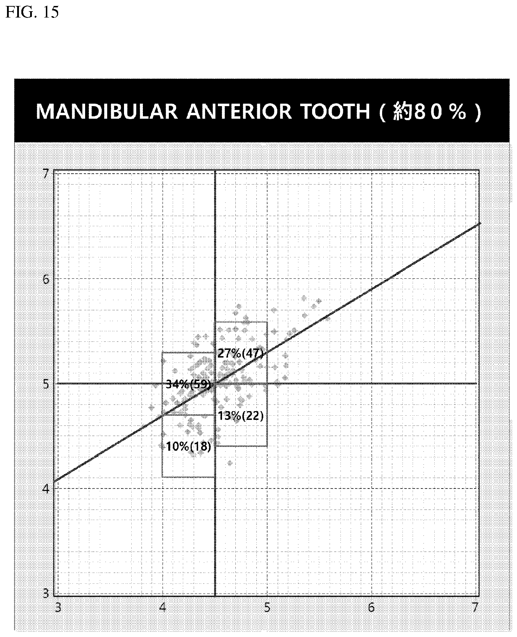

FIG. 15 is a diagram illustrating an example of a result obtained by dividing the statistical distribution range of the mandibular anterior teeth into regions such that the coverage according to the region division result is 80% or more according to the embodiment.

Referring to FIG. 15, the statistical distribution range of the horizontal and vertical lengths of the axial projection image of the customized ready-made abutment 100 according to the embodiment may be divided into a plurality of regions on the basis of the unit length corresponding to 0.5 mm. For example, the statistical distribution range of the horizontal and vertical lengths of the axial projection image of the customized ready-made abutment 100 may be divided into 4 regions on the basis of the unit length of 0.5 mm, and thus a coverage of 84% may be secured.

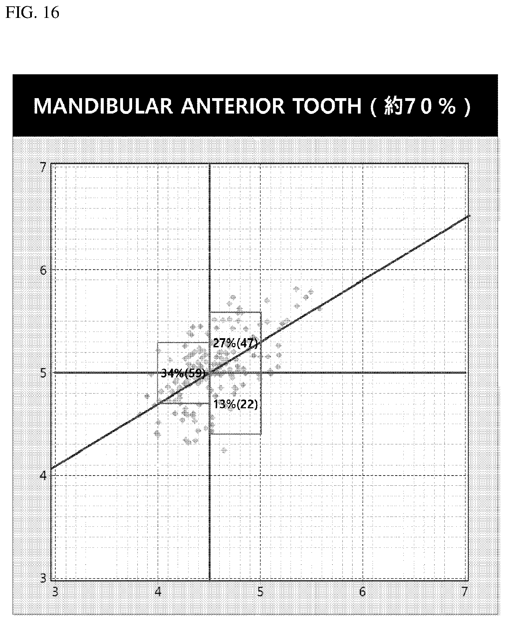

FIG. 16 is a diagram illustrating an example of a result obtained by dividing the statistical distribution range of the mandibular anterior teeth into regions such that the coverage according to the region division result is 70% or more according to the embodiment.

Referring to FIG. 16, the statistical distribution range of the horizontal and vertical lengths of the axial projection image of the customized ready-made abutment 100 according to the embodiment may be divided into a plurality of regions on the basis of the unit length corresponding to 0.5 mm. For example, the statistical distribution range of the horizontal and vertical lengths of the axial projection image of the customized ready-made abutment 100 may be divided into 3 regions on the basis of the unit length of 0.5 mm, and thus a coverage of 74% may be secured.

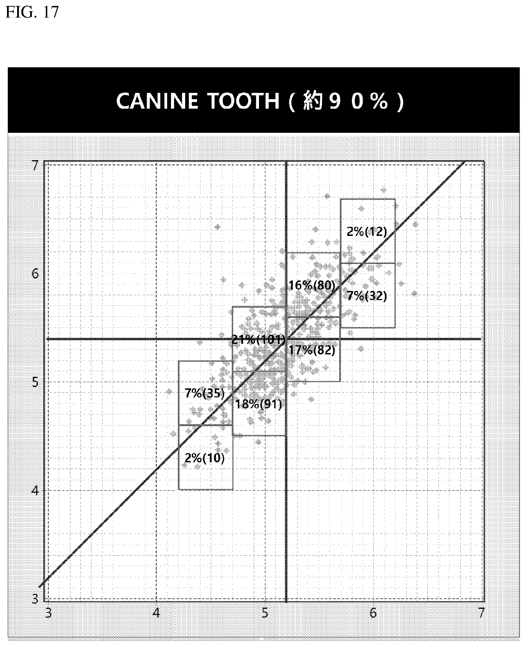

FIG. 17 is a diagram illustrating an example of a result obtained by dividing a statistical distribution range of canine teeth into regions such that a coverage according to the region division result is 90% or more according to an embodiment.

Referring to FIG. 17, a statistical distribution range of horizontal and vertical lengths of an axial projection image of a customized ready-made abutment 100 according to the embodiment may be divided into a plurality of regions on the basis of a unit length corresponding to 0.5 mm. For example, the statistical distribution range of the horizontal and vertical lengths of the axial projection image of the customized ready-made abutment 100 may be divided into 8 regions on the basis of the unit length of 0.5 mm, and thus a coverage of 90% may be secured.

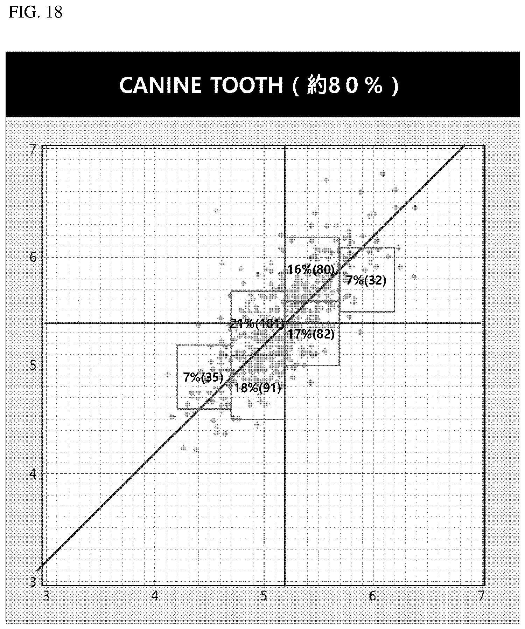

FIG. 18 is a diagram illustrating an example of a result obtained by dividing the statistical distribution range of the canine teeth into regions such that the coverage according to the region division result is 80% or more according to the embodiment.

Referring to FIG. 18, the statistical distribution range of the horizontal and vertical lengths of the axial projection image of the customized ready-made abutment 100 according to the embodiment may be divided and grouped into a plurality of regions on the basis of the unit length corresponding to 0.5 mm. For example, the statistical distribution range of the horizontal and vertical lengths of the axial projection image of the customized ready-made abutment 100 may be divided into 6 regions on the basis of the unit length of 0.5 mm, and thus a coverage of 86% may be secured.

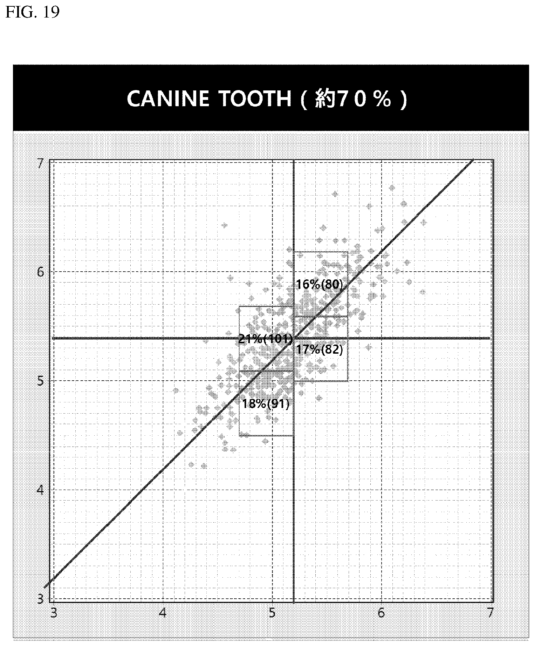

FIG. 19 is a diagram illustrating an example of a result obtained by dividing the statistical distribution range of the canine teeth into regions such that the coverage according to the region division result is 70% or more according to the embodiment.

Referring to FIG. 19, the statistical distribution range of the horizontal and vertical lengths of the axial projection image of the customized ready-made abutment 100 according to the embodiment may be divided into a plurality of regions on the basis of the unit length corresponding to 0.5 mm. For example, the statistical distribution range of the horizontal and vertical lengths of the axial projection image of the customized ready-made abutment 100 may be divided into 4 regions on the basis of the unit length of 0.5 mm, and thus a coverage of 72% may be secured.

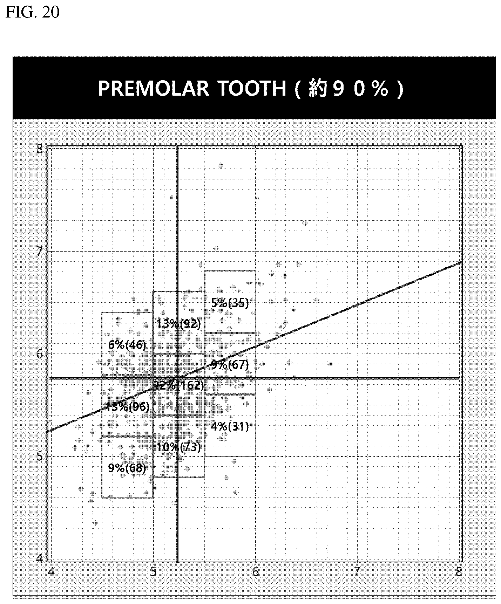

FIG. 20 is a diagram illustrating an example of a result obtained by dividing a statistical distribution range of premolar teeth into regions such that a coverage according to the region division result is 90% or more according to an embodiment.

Referring to FIG. 20, a statistical distribution range of horizontal and vertical lengths of an axial projection image of a customized ready-made abutment 100 according to the embodiment may be divided into a plurality of regions on the basis of the unit length corresponding to 0.5 mm. For example, the statistical distribution range of the horizontal and vertical lengths of the axial projection image of the customized ready-made abutment 100 may be divided into 9 regions on the basis of the unit length of 0.5 mm, and thus a coverage of 93% may be secured.

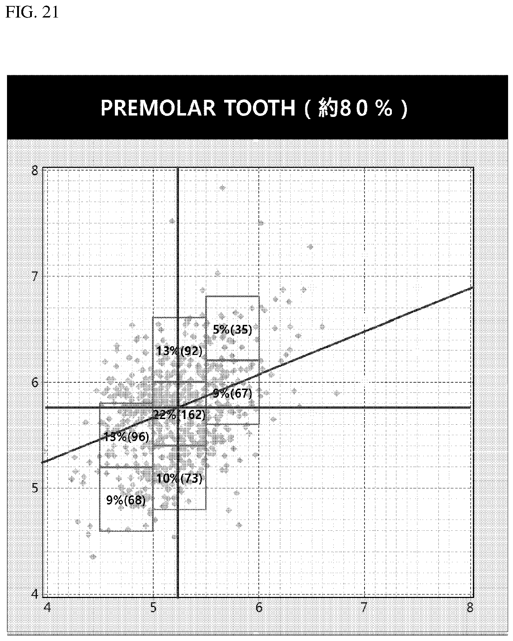

FIG. 21 is a diagram illustrating an example of a result obtained by dividing the statistical distribution range of the premolar teeth into regions such that the coverage according to the region division result is 80% or more according to the embodiment.

Referring to FIG. 21, the statistical distribution range of the horizontal and vertical lengths of the axial projection image of the customized ready-made abutment 100 according to an embodiment may be divided into a plurality of regions on the basis of the unit length corresponding to 0.5 mm. For example, the statistical distribution range of the horizontal and vertical lengths of the axial projection image of the customized ready-made abutment 100 may be divided into 7 regions on the basis of the unit length of 0.5 mm, and thus a coverage of 83% may be secured.

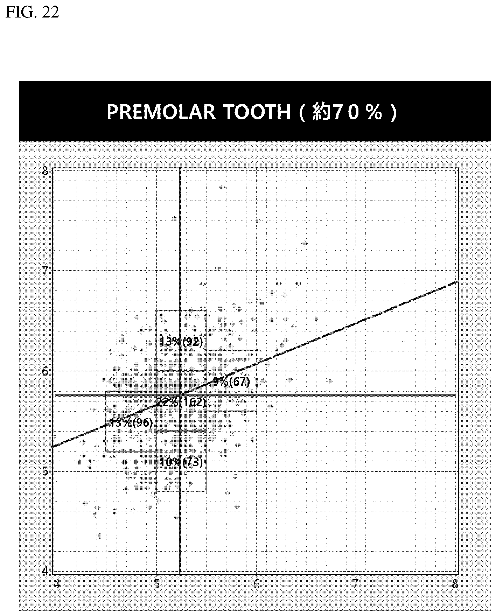

FIG. 22 is a diagram illustrating an example of a result obtained by dividing the statistical distribution range of the premolar teeth into regions such that the coverage according to the region division result is 65% or more according to the embodiment.

Referring to FIG. 22, the statistical distribution range of the horizontal and vertical lengths of the axial projection image of the customized ready-made abutment 100 according to the embodiment may be divided into a plurality of regions on the basis of the unit length corresponding to 0.5 mm. For example, the statistical distribution range of the horizontal and vertical lengths of the axial projection image of the customized ready-made abutment 100 may be divided into 5 regions on the basis of the unit length of 0.5 mm, and thus a coverage of 69% may be secured.

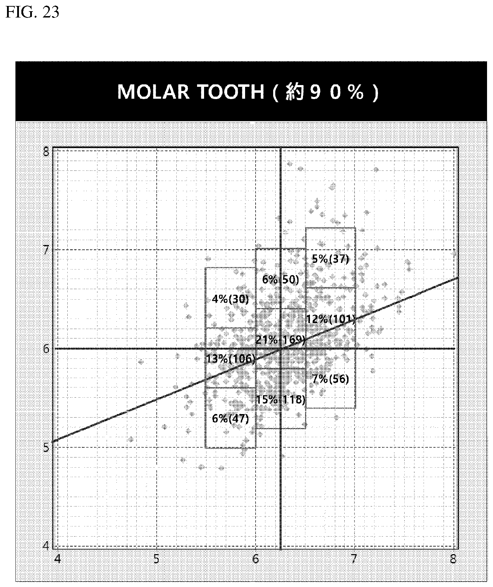

FIG. 23 is a diagram illustrating an example of a result obtained by dividing a statistical distribution range of molar teeth into regions such that a coverage according to the region division result is 85% or more according to an embodiment.

Referring to FIG. 23, a statistical distribution range of horizontal and vertical lengths of an axial projection image of a customized ready-made abutment 100 according to the embodiment may be divided into a plurality of regions on the basis of the unit length corresponding to 0.5 mm. For example, the statistical distribution range of the horizontal and vertical lengths of the axial projection image of the customized ready-made abutment 100 may be divided into 9 regions on the basis of the unit length of 0.5 mm, and thus a coverage of 88% may be secured.

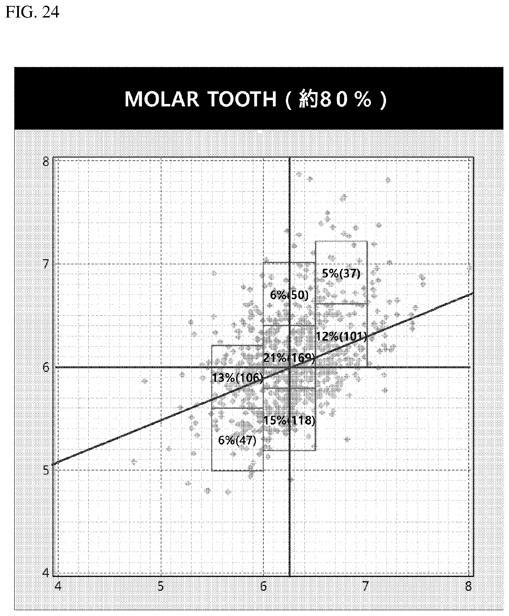

FIG. 24 is a diagram illustrating an example of a result obtained by dividing the statistical distribution range of the molar teeth into regions such that the coverage according to the region division result is 75% or more according to the embodiment.

Referring to FIG. 24, the statistical distribution range of the horizontal and vertical lengths of the axial projection image of the customized ready-made abutment 100 according to the embodiment may be divided into a plurality of regions on the basis of the unit length corresponding to 0.5 mm. For example, the statistical distribution range of the horizontal and vertical lengths of the axial projection image of the customized ready-made abutment 100 may be divided into 7 regions on the basis of the unit length of 0.5 mm, and thus a coverage of 77% may be secured.

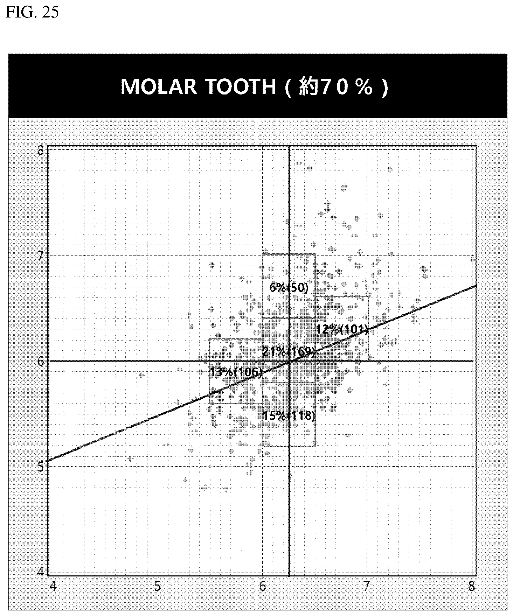

FIG. 25 is a diagram illustrating an example of a result obtained by dividing the statistical distribution range of the molar teeth into regions such that the coverage according to the region division result is 65% or more according to the embodiment.

Referring to FIG. 25, the statistical distribution range of the horizontal and vertical lengths of the axial projection image of the customized ready-made abutment 100 according to the embodiment may be divided into a plurality of regions on the basis of the unit length corresponding to 0.5 mm. For example, the statistical distribution range of the horizontal and vertical lengths of the axial projection image of the customized ready-made abutment 100 may be divided into 5 regions on the basis of the unit length of 0.5 mm, and thus a coverage of 66% may be secured.

As can be seen in FIGS. 11 to 25, the coverage of the divided regions or the grouped groups may be 65% or more. Even when the customized abutment is a ready-made abutment, the effect of the customized abutment can be expected only when the coverage is a certain level or more. In all of the various examples described in FIGS. 11 to 25, and the coverage of 65% or more may be maintained, and thus the effect of the customized abutment can be expected even when the customized abutment is a ready-made abutment.

A minimum lower limit is required to utilize a ready-made abutment as a customized abutment, and the effect of the customized abutment can be expected by maintaining a lower limit of 65% as shown in FIGS. 11 to 25.

Further, in FIGS. 11 to 25, the cases in which the unit length corresponds to 0.5 mm are described, but the present disclosure is not limited thereto. For example, since the unit length is determined to be 0.4 mm or more and less than 1.1 mm (e.g., 0.5 mm, 0.75 mm, 1.0 mm, etc.), the number of customized ready-made abutments 100 for the maxillary anterior tooth may be determined to be 4 or more and less than 9 on the basis of the horizontal and vertical lengths, the number of customized ready-made abutments 100 for the mandibular anterior tooth may be determined to be 2 or more and less than 7 on the basis of the horizontal and vertical lengths, the number of customized ready-made abutments 100 for the canine tooth may be determined to be 4 or more and less than 9 on the basis of the horizontal and vertical lengths, the number of customized ready-made abutments 100 for the premolar tooth may be determined to be 2 or more and less than 7 on the basis of the horizontal and vertical lengths, and the number of customized ready-made abutments 100 for the molar tooth may be determined to be 4 or more and less than 10 on the basis of the horizontal and vertical lengths. The number of customized ready-made abutments 100 may correspond to the number of groups according to grouping or the number of regions according to region division.

It will be understood by those skilled in the art that various changes may be made without departing from the spirit and scope of the present disclosure. Therefore, the disclosed methods should be considered in a descriptive sense only and not for purposes of limitation. The scope of the present disclosure is defined not by the above description but by the appended claims, and encompasses all modifications and equivalents that fall within the scope of the appended claims and will be construed as being included in the present disclosure.

## Claims

1. A customized ready-made abutment comprising:
a post positioned at an upper end thereof to be allowed to be coupled to an inside of a crown;
a lower part positioned at a lower end thereof such that a part or all of the lower part is allowed to be coupled to an implant; and
a gingival part positioned between the post and the lower part to be in contact with gingiva without being coupled to the implant,
wherein all teeth of maxilla and mandible are grouped into maxillary anterior teeth, mandibular anterior teeth, canine teeth, premolar teeth, and molar teeth, and a plurality of customized ready-made abutments are designed and manufactured such that a standard coverage of a patient-customized abutment for each group is 65% or more.

2. The customized ready-made abutment of claim 1, wherein all the teeth of the maxilla and the mandible are grouped into the maxillary anterior teeth, the mandibular anterior teeth, the canine teeth, the premolar teeth, and the molar teeth, and a plurality of customized ready-made abutments are designed and manufactured for each group such that the standard coverage of the patient-customized abutment for each group is 65% or more on the basis of statistical data of the patient-customized abutments.

3. The customized ready-made abutment of claim 2, wherein, when a type of a tooth is a molar tooth and a unit length corresponds to 0.5 mm, a statistical distribution range determined according to horizontal and vertical lengths of an axial projection image of the customized ready-made abutment is divided into 9 regions, and
a coverage of the 9 regions is 85% or more.

4. The customized ready-made abutment of claim 2, wherein, when a type of a tooth is a molar tooth and a unit length corresponds to 0.5 mm, a statistical distribution range determined according to horizontal and vertical lengths of an axial projection image of the customized ready-made abutment is divided into 7 regions, and
a coverage of the 7 regions is 75% or more.

5. The customized ready-made abutment of claim 2, wherein, when a type of a tooth is a molar tooth and a unit length corresponds to 0.5 mm, a statistical distribution range determined according to horizontal and vertical lengths of an axial projection image of the customized ready-made abutment is divided into 5 regions, and
a coverage of the 5 regions is 65% or more.

6. The customized ready-made abutment of claim 2, wherein, when a type of a tooth is a premolar tooth and a unit length corresponds to 0.5 mm, a statistical distribution range determined according to horizontal and vertical lengths of an axial projection image of the customized ready-made abutment is divided into 9 regions, and
a coverage of the 9 regions is 90% or more.

7. The customized ready-made abutment of claim 2, wherein, when a type of a tooth is a premolar tooth and a unit length corresponds to 0.5 mm, a statistical distribution range determined according to horizontal and vertical lengths of an axial projection image of the customized ready-made abutment is divided into 7 regions, and
a coverage of the 9 regions is 80% or more.

8. The customized ready-made abutment of claim 2, wherein, when a type of a tooth is a premolar tooth and a unit length corresponds to 0.5 mm, a statistical distribution range determined according to horizontal and vertical lengths of and axial projection image of the customized ready-made abutment is divided into 5 regions, and
a coverage of the 9 regions is 65% or more.

9. A customized ready-made abutment comprising:
a post positioned at an upper end thereof to be allowed to be coupled to an inside of a crown;
a lower part positioned at a lower end thereof such that a part or all of the lower part is allowed to be coupled to an implant; and
a gingival part positioned between the post and the lower part to be in contact with gingiva without being coupled to the implant,
wherein at least one of horizontal and vertical lengths of an axial projection image of the abutment, a height of the gingival part, a height of the post, and an angle of the post is standardized and determined according to a plurality of region division results for a statistical distribution range of patient-customized abutments.

10. The customized ready-made abutment of claim 9, wherein a number of customized ready-made abutments is determined based on a sum of a number of groups obtained as results obtained by performing grouping on the statistical distribution range for each tooth type on the basis of a unit length and/or a unit angle, and
the tooth type includes at least one of a maxillary anterior tooth, a mandibular anterior tooth, a canine tooth, a premolar tooth, and a molar tooth.

11. The customized ready-made abutment of claim 10, wherein the unit length is determined to be 0.4 mm or more and less than 1.1 mm, and thus the number of the customized ready-made abutments for the maxillary anterior tooth is determined to be 4 or more and less than 9 on the basis of the horizontal and vertical lengths,
the number of the customized ready-made abutments for the mandibular anterior tooth is determined to be 2 or more and less than 7 on the basis of the horizontal and vertical lengths,
the number of the customized ready-made abutments for the canine tooth is determined to be 4 or more and less than 9 on the basis of the horizontal and vertical lengths,
the number of the customized ready-made abutments for the premolar tooth is determined to be 2 or more and less than 7 on the basis of the horizontal and vertical lengths, and
the number of the customized ready-made abutments for the molar tooth is determined to be 4 or more and less than 10 on the basis of the horizontal and vertical lengths.
